# EUROPÄISCHE PATENTSCHRIFT

(11) **EP 1 781 430 B1**
(45) Veröffentlichungstag und Bekanntmachung des Hinweises auf die Patenterteilung: **26.03.2008**
(21) Anmeldenummer: 05774947.5
(22) Anmeldetag: 20.08.2005
(51) Int. Cl.: B21D 5/10

(54) **VERFAHREN UND VORRICHTUNG ZUM HERSTELLEN EINES LÄNGSNAHTGESCHWEISSTEN HOHLPROFILS**
METHOD AND DEVICE FOR THE PRODUCTION OF A LONGITUDINALLY WELDED HOLLOW PROFILE
PROCEDE ET DISPOSITIF POUR PRODUIRE UN PROFILE CREUX A SOUDURE LONGITUDINALE

(30) Priorität: 25.08.2004 DE 102004041024
(43) Veröffentlichungstag der Anmeldung: 09.05.2007
(73) Patentinhaber: ThyssenKrupp Steel AG, 47166 Duisburg (DE)
(72) Erfinder: BRÜGGENBROCK, Michael, 48720 Rosendahl (DE); FLEHMIG, Thomas, 40885 Ratingen (DE); RITUPER, Wladimir, 47169 Duisburg (DE); TOHFA, Mohamed, 47198 Duisburg (DE)
(74) Vertreter: Cohausz & Florack
(86) Internationale Anmeldenummer: PCT/EP2005/009027
(87) Internationale Veröffentlichungsnummer: WO 2006/021391

(56) Entgegenhaltungen:
- WO-A-94/22608
- WO-A-99/67037
- DE-C- 966 111

## Beschreibung

Die Erfindung betrifft ein Verfahren und eine Vorrichtung zur Herstellung eines längsnahtgeschweißten Hohlprofils aus einem parallele Längskanten aufweisenden Blechzuschnitt.

In der Automobilindustrie werden zunehmend offene, verschweißte Profile durch dünnwandige Hohlprofile ersetzt, deren Ausgangsformen aus längsnahtverschweißten Rohren bestehen. Diese Bauteile sind durch geringe Wandstärken so konzipiert, dass ein minimales Gewicht unter höchster Ausnutzung des Materials erreicht wird.

Damit die technische Funktionalität solcher Space-Frame-Strukturen gewährleistet werden kann, muss der Herstellungsprozess der Bauteile bis hin zur endgültigen Formgebung beherrschbar sein.

Ein wesentliches Element der Prozesskette stellt dabei der Profileinform-Prozess dar, bei dem die als Hohlprofile zum Einsatz kommenden Rohrelemente geformt werden. Zum Einformen spezieller Profile, so genannter "Tailored Tubes" hat sich die diskontinuierliche Arbeitsweise, also die Einformung aus fertig geschnittenen Platinen bewährt. Tailored Tubes sind solche Rohrelemente, die aus Blechabschnitten zusammengesetzt sind, deren Materialeigenschaften an die im praktischen Einsatz oder im Formgebungsprozess auftretenden Belastungen und Erfordernisse angepasst sind.

Zum Einformen von Blechplatinen zu fertig geschweißten Profilen gibt es verschiedene Möglichkeiten. Die meisten Lösungen nutzen jedoch getrennte Arbeitsstationen für das Einformen und das Schweißen (DE 44 32 674 C1).

Eine die Herstellung von längsnahtverschweißten Rohrelementen in einer Station ermöglichende Vorrichtung der eingangs angegebenen Art ist beispielsweise aus der DE-PS 966 111 bekannt. Bei dieser Vorrichtung wird der Blechzuschnitt zu einem Schlitzrohr umgeformt und verschweißt. Dazu wird ein ebenes Blech zwischen zwei auf einem Werkzeugträger gegeneinander verfahrbare, spiegelbildlich zueinander angeordnete Werkzeughälften gehalten, die jeweils eine die Außenkontur des herzustellenden Rohres bestimmende, halbschalenförmige Ausnehmung besitzen. Die Längskanten des Blechzuschnitts werden dabei so parallel zu den Ausnehmungen der Werkzeughälften ausgerichtet, dass die Werkzeughälften die ihnen jeweils zugeordneten Kanten beim Zusammenfahren aufnehmen und im Querschnitt betrachtet kreisbogenförmig aufeinander zu bewegen. Während des Zusammenfahrens wird der Blechzuschnitt durch Halter fixiert, die an den den beiden kurzen Kanten des Blechzuschnitts zugeordneten Enden der Mittellängsachse des Blechzuschnitts positioniert sind. Auf diese Weise ist sichergestellt, dass sich der Blechzuschnitt in Folge des Zusammenfahrens der Werkzeughälften in einer gleichmäßigen Bewegung entlang der durch die Ausnehmungen der Werkzeughälften vorgegebenen Kontur schiebt, bis seine Längskanten im Scheitelpunkt aufeinander treffen. Das so gebildete Schlitzrohr wird in dieser Position gehalten, um seine Längskanten zu verschweißen. Um den Schlitzbereich des Schlitzrohres zugänglich zu machen, werden dann die oberen Endabschnitte der Werkzeughälften aufgeklappt. Anschließend werden die im Schlitzbereich einander zugeordneten Längskanten miteinander längsnahtverschweißt.

Ein entscheidender Nachteil der aus der DE-PS 966 111 bekannten Vorgehensweise besteht darin, dass sie eine bestimmte Mindeststeifigkeit des verarbeiteten Blechs voraussetzt. Nur so ist gewährleistet, dass sich das Blech beim Zusammenfahren der Werkzeughälften gleichförmig zu dem Schlitzrohr krümmt. Dünne Bleche lassen sich auf diese bekannte Weise nicht gezielt zu einem Rohr mit einer exakt vorbestimmten Querschnittsform verformen, sondern bilden im Zuge des Verformungsvorgangs unkontrollierbar Kanten und Falten aus, die das erhaltene Rohrelement unbrauchbar machen. Auch führt das Verschweißen eines gemäß dem aus der DE-PS 966 111 bekannten Verfahrens geformten Schlitzrohres zu unerwünschten Verformungen, wenn das Blech so dünn ist, dass es die beim Schweißen unvermeidbar auf ihm lastenden Kräfte nicht aufnehmen kann.

Ein Versuch, die Nachteile von Vorrichtungen der voranstehend erläuterten Art zu beseitigen, ist aus der WO 99/67037, welche eine Vorrichtung gemäß dem Oberbegriffs des Anspruchs 11 offenbart, bekannt. Die aus dieser Druckschrift bekannte Vorgehensweise verbindet das Einformen und Schweißen in einer Arbeitsstation. Dazu wird ein Werkzeug eingesetzt, das nach dem Vorbild der DE-PS 966 111 zwei auf einem Werkzeugträger gegeneinander verfahrbare Werkzeughälften mit jeweils einer zylindrischen, halbschalenförmigen Ausnehmung aufweist. Zusätzlich ist den Ausnehmungen der Werkzeughälften jeweils eine Innendornhälfte zugeordnet, die unter Freilassung eines Spaltes zwischen ihrer Umfangsfläche und der Innenfläche der Ausnehmung in der jeweiligen Ausnehmung positioniert und fest mit der jeweiligen Werkzeughälfte verbunden ist. Auf diese Weise ist im Bereich der Ausnehmung jeder Werkzeughälfte ein Ringspalt gebildet.

Zum Formen des Rohrelements wird das zu verformende dünne Blech so zwischen die Werkzeughälften gelegt, dass seine Längskanten beim anschließenden Zusammenfahren der Werkzeughälften in den in der jeweiligen Werkzeughälfte gebildeten Ringspalt eingefädelt wird. Beim weiteren Zusammenfahren der Werkzeughälften schieben sich die Längskanten weiter den Längsspalt hinauf und das Blech wird zu einem Schlitzrohr gebogen. Die gleichzeitig auf der Innen- und Außenseite des Blechabschnitts erfolgende Abstützung des Blechzuschnitts im Bereich des Ringspaltes stellt dabei sicher, dass es zu keiner unerwünschten Falten- und Kantenbildung kommt.

Dieser als "Einrollen" bezeichnete Formvorgang ist abgeschlossen, wenn sich die Längskanten im Scheitel des erhaltenen Schlitzrohres treffen. Nach einem Nachrunden des Kantenstoßes mittels einer Rolle kann dieses Schlitzrohr im Bereich seines Schlitzes verschweißt werden, ohne dass dazu das Rohr in eine andere Vorrichtung verbracht werden muss.

Das aus der WO 99/67037 bekannte Verfahren ermöglicht zwar die Herstellung exakt geformter Rohrelemente, zeigt in der Praxis jedoch einige Nachteile. So erfordert die geteilte Ausführung des Innendornes eine hohe Fertigungsgenauigkeit bei der Herstellung der in der bekannten Vorrichtung eingesetzten Werkzeuge. Auch ist die Ausgestaltung der Maschine komplex, da zum Trennen des fertig verschweißten Rohr-Hohlprofils von dem geteilten Innendorn aufwändige Zugeinheiten und während des Einformens spezielle Niederhalter benötigt werden. Darüber hinaus besteht besonders bei der Verarbeitung dünner Bleche nach wie vor die Gefahr, dass es beim Verschweißen aufgrund der dabei auftretenden Kantenbelastungen zu unerwünschten Verformungen im Bereich der Schweißnaht kommt.

Ausgehend von dem voranstehend erläuterten Stand der Technik bestand die Aufgabe der Erfindung darin, ein Verfahren und eine Vorrichtung zu schaffen, die mit reduziertem apparativen Aufwand bei verkürzten Fertigungszeiten die Herstellung von exakt geformten Hohlprofilen ermöglichen.

In Bezug auf das Verfahren wird diese Aufgabe durch ein Verfahren zum Herstellen eines längsnahtgeschweißten Hohlprofils aus einem definierte Längskanten aufweisenden Blechzuschnitt gelöst,
- bei dem der Blechzuschnitt zwischen zwei in einer Ausgangsstellung, in der sie auseinander gefahren sind, befindliche Werkzeugteile gelegt wird, die jeweils eine Ausnehmung aufweisen, die die Außenform mindestens eines Abschnitts des herzustellenden Hohlprofils bestimmt,
- bei dem anschließend ein Dorn, dessen Außenform die Innenform des herzustellenden Hohlprofils bestimmt, so in der Ausnehmung des einen Werkzeugteils ausgerichtet wird, dass zwischen seiner Umfangsfläche und der Innenfläche der Ausnehmung ein Spalt gebildet ist, dessen Dicke mit einem geringen Übermaß der Dicke des zu verformenden Blechzuschnitts entspricht,
- bei dem das Blech im Bereich seiner vom Dorn abgewandten Hälfte gehalten wird,
- bei dem das dem Dorn zugeordnete Werkzeugteil mit dem Dorn unter Aufrechterhaltung des Spaltes in Richtung der vom Dorn abgewandten Längskante des Blechzuschnitts so verschoben wird, dass der Blechzuschnitt mit seiner dem Dorn zugeordneten Längskante in den Spalt einläuft, bis sie ein Einschubende erreicht hat,
- bei dem der Dorn in der Ausnehmung des anderen Werkzeugteils derart ausgerichtet wird, dass zwischen der Außenfläche des Dorns und der Innenfläche dieser Ausnehmung ein Spalt ausgebildet ist, dessen Dicke mit einem geringen Übermaß der Dicke des zu verformenden Blechzuschnitts entspricht,
- bei dem das nun dem Dorn zugeordnete Werkzeugteil mit dem Dorn unter Aufrechterhaltung des Spaltes in Richtung der vom Dorn abgewandten Längskante des Blechzuschnitts so verschoben wird, dass der Blechzuschnitt mit seiner dem Dorn zugeordneten Längskante in den Spalt einläuft, bis sie ein Einschubende erreicht hat und aus dem Blechzuschnitt ein den Dorn an seinen Umfangsflächen umgebendes Schlitzprofil bildet,
- bei dem der Dorn aus dem Innenraum des Schlitzprofils bewegt wird,
- bei dem die den Schlitz begrenzenden Längskanten des Blechzuschnitts miteinander verschweißt werden, wobei das Schlitzprofil von den Werkzeugteilen gehalten wird, und
- bei dem die Werkzeugteile in ihre Ausgangsstellung gefahren werden, um das fertig verschweißte Hohlprofil aus den Werkzeugteilen zu entnehmen.

Anders als beim in der WO 99/67037 beschriebenen Stand der Technik sieht es die Erfindung vor, die Verformung des Blechzuschnitts zu einem Schlitzprofil, das anschließend zu dem fertigen Hohlprofil verschweißt wird, in mindestens zwei Fertigungsstufen vorzunehmen. Dazu wird ein Dorn eingesetzt, der in der ersten Stufe dem einen Werkzeugteil und in der zweiten Stufe dem zweiten Werkzeugteil zugeordnet wird, um mit der Ausnehmung des jeweiligen Werkzeugteils jeweils einen Spalt zu bilden, in den jeweils ein Abschnitt des Blechzuschnitts eingefädelt wird.

Die mindestens zweistufig erfolgende Formgebung des Blechzuschnitts ermöglicht es, einen Dorn für die Abstützung des Blechzuschnitts während der Erzeugung des Schlitzprofils zu verwenden, der eine in sich abgeschlossene Baueinheit bildet und als solche durch eine einfache Stelleinrichtung bewegt werden kann. Schon auf diese Weise ist der für die Herstellung des Hohlprofils erforderliche apparative Aufwand deutlich reduziert.

Hinzukommt, dass durch die mindestens zweistufig erfolgende Verformung des Blechzuschnitts zu dem Schlitzprofil auch die Sicherheit, mit der diese Formgebung erfolgt, deutlich erhöht ist. So befindet sich jeweils nur eine Hälfte des Blechzuschnitts in der Verformung, während die andere Hälfte sicher gehalten wird. Auf diese Weise wird eine verbesserte Stabilität des Blechzuschnitts während des Verformungsvorgangs erreicht mit dem Erfolg, dass der Verformungsvorgang insgesamt schneller erfolgen kann. Auch ist die Gefahr von Störungen durch ein Verkanten des Blechs im jeweils gebildeten Spalt auf diese Weise auf ein Minimum reduziert. Das Einschieben des Blechzuschnitts in den Spalt kann daher mit erhöhter Geschwindigkeit erfolgen. Darüber hinaus ist auch der für das Trennen von Dorn und Hohlprofil erforderliche Aufwand dadurch, dass der Dorn im Ganzen bewegt werden kann, reduziert, so dass auch dessen Bewegungen schnell erfolgen können. Im Ergebnis wird so erreicht, dass trotz der zweistufigen Ausführung des erfindungsgemäßen Verfahrens die Fertigungszeit insgesamt gegenüber den im Stand der Technik erreichbaren Fertigungszeiten bei gleichzeitig gesteigerter Fertigungsgenauigkeit verkürzt sind.

In Bezug auf die Vorrichtung wird die oben genannte Aufgabe in entsprechender Weise durch eine Vorrichtung zur Herstellung eines längsnahtgeschweißten Hohlprofils aus einem definierte Längskanten aufweisenden Blechzuschnitt gelöst, die mit mindestens zwei aus einer Ausgangsstellung, in der sie auseinander gefahren sind, in eine Formstellung gegeneinander zustellbaren Werkzeugteilen, die jeweils eine Ausnehmung aufweisen, die die Außenform mindestens eines Abschnitts des herzustellenden Hohlprofils bestimmt, und mit einer Schweißeinrichtung zum Verschweißen der Längskanten des Blechzuschnitts nach seiner Verformung zu einem Schlitzprofil ausgestattet ist, wobei erfindungsgemäß
- ein Dorn, der von einer Stelleinrichtung getragen ist, die ihn aus einer ersten Stellung, in der er in der Ausnehmung des einen Werkzeugteils unter Ausbildung eines Spaltes zwischen der Innenfläche der Ausnehmung dieses Werkzeugteils und der Umfangsfläche des Dorns positioniert ist, in eine zweite Stellung bewegt, in der er in der Ausnehmung des zweiten Werkzeugteils unter Ausbildung eines Spaltes zwischen der Innenfläche der Ausnehmung dieses Werkzeugteils und der Umfangsfläche des Dorns positioniert ist, und
- eine Halteeinrichtung zum Halten des Blechzuschnitts im Bereich einer seiner Längskanten vorgesehen sind.

Eine besonders einfach und schnell durchzuführende Möglichkeit der Trennung des Dorns von dem zu fertigenden Hohlprofil kann dadurch geschaffen werden, dass gemäß einer vorteilhaften Ausgestaltung der Erfindung die Werkzeugteile unter Mitnahme der in ihren Ausnehmungen jeweils liegenden Abschnitten der Blechzuschnitte so weit aufgefahren werden, dass der Dorn durch die zwischen den Längskanten des Schlitzprofils dann erweiterte Öffnung bewegt werden kann.

Die Formhaltigkeit erfindungsgemäß erzeugter Hohlprofile kann dadurch verbessert werden, dass die Werkzeugteile, nachdem der Dorn aus dem Schlitzprofil heraus bewegt ist, solange gegen einander geschoben werden, bis der Kantenstoß geschlossen ist bzw. eine minimale Weite erreicht hat.. Auf diese Weise können auch im Bereich des Kantenstoßes und der dort herzustellenden Schweißnaht Form- und Maßabweichungen minimiert werden. Darüber hinaus erleichtert die Minimierung der Schlitzweite den für die Verschweißung erforderlichen Aufwand. Besonders einfach und betriebssicher lässt sich das Zusammenschieben der Längskanten im Bereich des Schlitzes des aus dem Blechzuschnitt vorgeformten Schlitzprofils dann bewerkstelligen, wenn die Sollweite des Schlitzes durch einen in den Schlitz gehaltenen Anschlag vorgegeben wird. Der dazu erforderlich apparative Aufwand kann dabei dadurch minimiert werden, dass der Anschlag von dem Dorn getragen ist. Der Anschlag ist dabei bevorzugt schwertartig ausgebildet und erstreckt sich über die Länge des Schlitzes des Schlitzprofils.

Die Exaktheit der Formgebung eines erfindungsgemäß hergestellten Hohlprofils kann zusätzlich dadurch verbessert werden, dass das Zusammenfahren der Werkzeugteile zum Einstellen des Kantenstoßes des aus dem Blechzuschnitt vorgeformten Schlitzprofils mindestens in zwei Stufen erfolgt. Jede Stufe kann dabei für ein Kalibrieren des Schlitzprofils genutzt werden, so dass bereits die Form des Schlitzprofils mit jeder Stufe der Verformung immer perfekter an die geforderte Endform des fertigen Hohlprofils angepasst wird. Diese mehrstufige Formgebung kann dadurch unterstützt werden, dass der Anschlag mindestens einen Absatz, insbesondere zwei unterschiedlich dicke Absätze, aufweist. Sind zwei unterschiedlich dicke Absätze vorgesehen, so kann der erste die Sollweite des Schlitzes in der ersten Stufe und der zweite die Sollweite des Schlitzes in der zweiten Stufe des Zusammenfahrens bestimmen.

Nach dem Schweißprozess besteht eine weitere Möglichkeit der Formgebung durch einen Innenhochdruckumformprozess. Bei nach wie vor zusammengefahrenen Werkzeugteilen ermöglicht dieses Innenhochdruckverformen, Nebenformelemente in das Hohlprofil einzubringen. Zu diesem Zweck können in den Werkzeugteilen Ausnehmungen vorgesehen sein, wobei die vorgegebene Sollform durch dieses Verfahren angepasst wird.

Eine weitere, den apparativen Aufwand minimierende Variante des erfindungsgemäßen Verfahrens besteht darin, dass der Dorn derart auf den Blechzuschnitt abgesenkt wird, dass er eine den Blechzuschnitt auf einem Untergrund fest haltende Druckkraft ausübt.

Die Durchführung des erfindungsgemäßen Verfahrens kann dadurch zusätzlich vereinfacht werden, dass bei den Werkzeugteilen der Anschlag, der beim Einschieben der Blechzuschnitte deren Einschubende festlegt, aus einer Arbeitsstellung, in der er an der Längskante der Ausnehmung positioniert ist, in eine Ruhestellung überführbar ist. In der Ruhestellung sind die miteinander zu verschweißenden Längskanten des aus dem Blechzuschnitt vorgeformten Schlitzprofils frei zugänglich, so dass sowohl die Einstellung der Sollweite des Schlitzes des Schlitzprofils als auch die Verschweißung selbst problemlos vorgenommen werden können.

An in erfindungsgemäßer Weise hergestellten Hohlprofilen können Nebenformelemente, wie Sicken oder ähnliche Prägungen, auf einfache Weise dadurch hergestellt werden, dass bei einer erfindungsgemäßen Vorrichtung der Dorn eine Prägeeinrichtung zum Prägen des um ihn gelegten Blechs aufweist. Um dabei auch größervolumige Formelemente sicher auszubilden, kann zu diesem Zweck die Prägeeinrichtung als über den Umfang des Dorns hinaus verfahrbare Prägestempel und die in den Ausnehmungen der Werkzeugteile vorhandenen Formelemente als Gegenstück für die von der Prägeeinrichtung erzeugte Formgebung ausgebildet sein. In entsprechender Weise kann im Bereich mindestens einer der Ausnehmungen der Werkzeugteile eine Prägeeinrichtung vorgesehen sein, wobei dazu die Prägeeinrichtung ebenfalls als Prägestempel und im Dorn ein Formelement als Gegenstück für die von der Prägeeinrichtung erzeugte Formgebung ausgebildet sein kann. Die jeweils eingesetzten Prägeeinrichtungen werden bevorzugt hydraulisch betrieben, um die erforderlichen Presskräfte sicher aufbringen zu können. Denkbar sind auch Prägeeinrichtungen, die pneumatisch, mechanisch oder elektrisch betrieben werden.

Das für das Einfädeln des Blechzuschnitts in den zwischen der Umfangsfläche des Dorns und der Innenfläche der jeweiligen Ausnehmung gebildeten Spalts erforderliche Übermaß der Spaltdicke kann auf einfache Weise dadurch hergestellt werden, dass die Außenform des Dorns um ein geringes Untermaß kleiner ist als die Innenform des herzustellenden Hohlprofils. Praktische Versuche haben ergeben, dass es ausreicht, wenn dieses Untermaß bis zu 0,2 mm gegenüber der Sollinnenform des zu erzeugenden Hohlprofils beträgt, dass also die Dicke des Spalts nur um bis zu 0,2 mm größer sein muss als die Dicke des jeweils verarbeiteten Blechs.

Weitere vorteilhafte Ausgestaltungen der Erfindung gehen aus den abhängigen Ansprüchen hervor und werden nachfolgend anhand einer ein Ausführungsbeispiel darstellenden Zeichnung näher erläutert. Es zeigen jeweils schematisch in einem Vertikalschnitt quer zur Längserstreckung, soweit nicht anders angegeben:

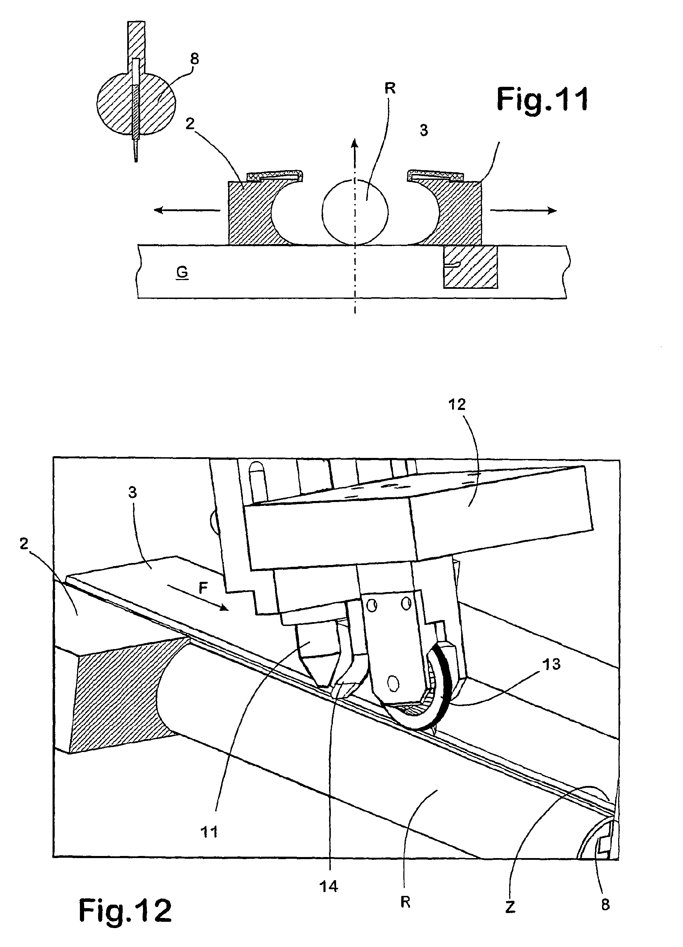

- Fig. 1 - 11: eine Vorrichtung zum Formen eines rohrförmigen Hohlprofils in verschiedenen Betriebsstellungen;
- Fig. 12: die Vorrichtung gemäß Fig. 1 beim Verschweißen eines aus dem Blechzuschnitt geformten Schlitzprofils in einem Teilausschnitt in teilweise aufgebrochener perspektivischer Ansicht.

Die Vorrichtung 1 zum Herstellen eines längsnahtverschweißten rohrförmigen Hohlprofils R umfasst zwei Werkzeugteile 2,3, die auf einer Grundplatte G gegeneinander verfahrbar gelagert sind. Die Arbeitslänge der Vorrichtung 1 für die Herstellung von Hohlprofilen R in Form von Rohrelementen beträgt beispielsweise bis zu 3.000 mm.

Zum Zusammen- und Auseinanderfahren der Werkzeugteile 2,3 sind hier nicht gezeigte Stelleinrichtungen vorgesehen, von denen jeweils mehrere, beispielsweise vier, in Längsrichtung der Werkzeugteile 2,3 verteilt angeordnet sein können, um eine möglichst gleichförmige Bewegung der Werkzeugteile 2,3 und eine ebenso gleichförmige Übertragung der von den Werkzeugteilen 2,3 ausgeübten Kräfte sicherzustellen. Die Stelleinrichtungen sind dabei so ausgelegt, dass sie die Werkzeugteile 2,3 mit einer Geschwindigkeit von 1 mm/s bis 80 mm/s bewegen und dabei eine Kraft von mindestens 7.500 kN ausüben können.

In die dem jeweils anderen Werkzeugteil 2,3 zugeordnete Seite der Werkzeugteile 2,3 ist jeweils eine halbschalenförmige Ausnehmung 4,5 eingeformt. Der Radius der Einwölbung der Innenflächen 6,7 der Ausnehmungen 4,5 entspricht dabei dem Außenradius des herzustellenden Hohlprofils R.

Des Weiteren weist die Vorrichtung 1 einen aus einem Vollmaterial gefertigten Dorn 8 auf, der mittels einer nicht dargestellten Stelleinrichtung aus einer Wartestellung in seine verschiedenen Arbeitsstellungen bewegt werden kann. Die nicht gezeigte Stelleinrichtung ist dabei so eingerichtet, dass sie den Dorn 8 in vertikaler Richtung verstellen kann, um eine Haltekraft auf ein auf die Grundplatte G zwischen die in Ausgangsstellung befindlichen Werkzeugteile 2,3 gelegten Blechzuschnitt B auszuüben.

Im Bereich seines der Grundplatte G zugeordneten Scheitels ist in den Dorn 8 eine nutförmige Ausnehmung 9 eingeformt. Die Ausnehmung 9 bildet eine Führung für einen schwertartig geformten, nach Art einer Leiste ausgebildeten Anschlag 10, dessen Länge der Länge des Dornes 8 entspricht. Die Höhe der Ausnehmung 9 entspricht dabei mindestens der Höhe des Anschlags 10, so dass der Anschlag 10 bei auf dem Blechzuschnitt B aufsitzendem Dorn 8 vollständig und selbsttätig in die Ausnehmung 9 eingeschoben ist, während er beim Anheben des Dorns 8 durch eine nicht dargestellte Stelleinrichtung in eine ausgefahrene Stellung bewegt wird oder sich durch die Wirkung der Schwerkraft ebenso selbsttätig in diese ausgefahrene Stellung bewegt, in der er über den unten liegenden Scheitel des Dorns 8 hinaus steht. In der ausgefahrenen Stellung ist der Anschlag 10 durch nicht gezeigte Sicherungselemente gehalten.

Der Anschlag 10 weist einen im Querschnitt rechteckigen oberen Abschnitt 10a auf, mit dem er in der Ausnehmung 9 geführt ist. An den Abschnitt 10a schließt sich ein erster Absatz 10b an, der sich über die Länge des Dorns 8 erstreckt und der im Querschnitt betrachtet mittig zum Abschnitt 10a ausgerichtet ist. Die Dicke des ersten Absatzes 10b entspricht an seinem an den oberen Abschnitt 10a angrenzenden Bereich der Sollweite des Schlitzes Z eines aus dem Blechzuschnitt B vorgeformten, rohrförmigen Schlitzprofils Sr nach einer ersten Verformungsstufe. Dabei ist der Absatz 10b schneidenartig, im Querschnitt spitz zulaufend ausgebildet.

Zum Schweißen des aus dem Blechzuschnitt B geformten Schlitzprofils Sr wird bevorzugt eine Laserschweißeinrichtung 11 eingesetzt. Es ist jedoch auch denkbar, andere Schweißaggregate, beispielsweise induktiv arbeitende Schweißeinrichtungen, zu verwenden, die eine wirtschaftliche Verschweißung der einander zugeordneten Längskanten im Bereich des Schlitzes Z des Schlitzprofils Sr ermöglichen.

Die Laserschweißeinrichtung 11 ist an einem Träger 12 befestigt, der mittels einer nicht dargestellten Stelleinrichtung entlang des Schlitzes Z bewegt werden kann. Des Weiteren trägt der Träger 12 eine Nachformrolle 13, die in Schweißrichtung F mit geringem Abstand vor der Laserschweißeinrichtung 11 angeordnet ist. Mindestens die Laserschweißeinrichtung 11 sollte von einem hier nicht gezeigten Gehäuse umgeben sein, um die Bedienperson vor der Lichtstrahlung zu schützen.

Zusätzlich kann der Träger 12 eine hier nicht dargestellte Reinigungseinrichtung tragen, die den Schweißbereich reinigt, bevor die Laserschweißeinrichtung 11 ihn erreicht. Die Reinigungseinrichtung kann den im Schweißbereich vorhandenen Schmutz absaugen, abbürsten oder wegspülen.

Zur Nivellierung der Bandkanten können Gleitschuhe 14 oder Rollen vorgesehen werden, die ebenfalls an dem Träger 12 befestigt werden. Der Träger 12 kann darüber hinaus eine Zuführleitung tragen, über die Schutzgas in den Schweißbereich geleitet wird. Bevorzugt wird der Träger 12 von einer Stelleinrichtung bewegt, die in exakt drei Freiheitsgraden (X-, Y-, Z-Richtung) steuerbar ist.

Um die Ausbringrate bei Verwendung einer Schmelzstrahlschweißquelle zu erhöhen, kann die Vorrichtung 1 als Twin-Vorrichtung ausgeführt sein. Dies ermöglicht es, die eine Vorrichtung mit einem neuen Blechzuschnitt B zu beladen und einzuformen, während in der anderen Vorrichtung noch die Verschweißung vorgenommen wird.

Im Bewegungsbereich des zweiten Werkzeugteils 3 ist in die Grundplatte G eine sich in Längsrichtung der Werkzeugteile 2,3 erstreckende Ausnehmung 15a eingeformt, in der ein Haltebalken 16 sitzt. Der Haltebalken 16 kann mittels nicht gezeigter Stelleinrichtungen aus einer Ruheposition, in der seine obere Seite 16a bündig mit der Oberseite der Grundplatte G abschließt, in eine Haltestellung angehoben werden, in der ein in den Balken auf seiner dem ersten Werkzeugteil 2 zugeordneten Seite eingeformter Halteschlitz 16b mit seiner Unterkante bündig zur Oberseite der Grundplatte G angeordnet ist.

Auf den Werkzeugteilen 2,3 sind jeweils Anschläge 17,18 in Form von Zentrierhebeln montiert, die aus einer oberhalb der Werkzeugteile 2,3 befindlichen Ruhestellung in eine Arbeitsstellung überführt werden können, in der sie über die obere Längskante der Ausnehmungen 4,5 der Werkzeugteile 2,3 hinaus in Richtung der Grundplatte G zeigen und die Ausnehmungen 4,5 an diesen Längskanten begrenzen.

Zu Beginn des Herstellungsprozesses wird der Dorn 8 so im Bereich des einen Werkzeugteils 2 positioniert, dass er mit seiner diesem Werkzeugteil 2 zugeordneten Abschnitt seines Umfangs in der Ausnehmung 4 dieses Werkzeugteils 2 angeordnet ist. Auf diese Weise ist zwischen der betreffenden Umfangsfläche des Dorns 8 und der Innenfläche 6 der betreffenden Ausnehmung 4 ein Spalt 15 gebildet, dessen Dicke um ein Übermaß von max. 0,2 mm größer ist als die Dicke des zu verformenden Blechzuschnitts B.

Der Haltebalken 16 befindet sich in seiner angehobenen Stellung, so dass sein Halteschlitz 16b frei zugänglich ist.

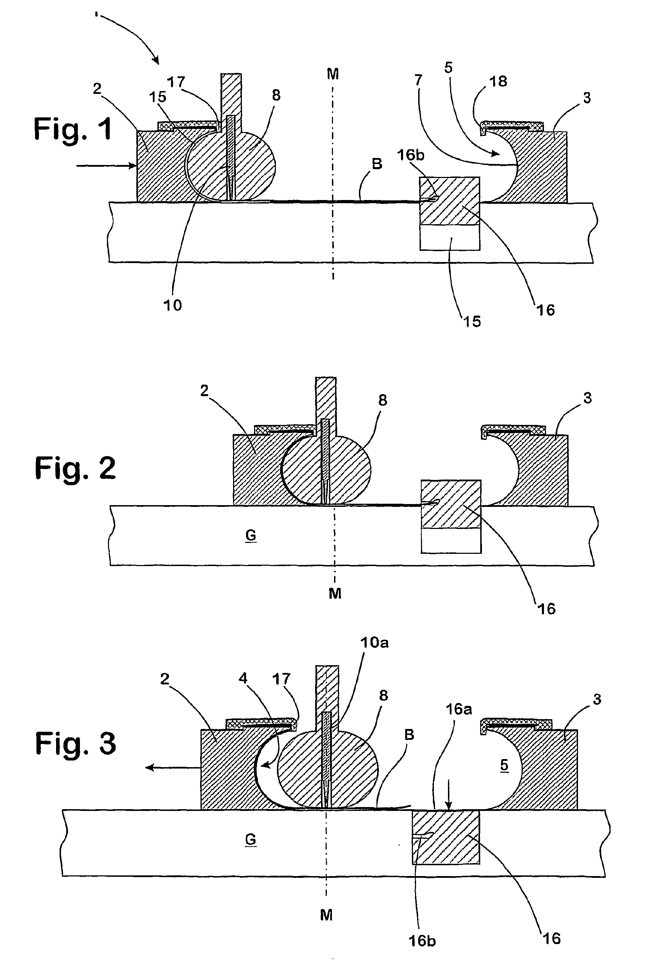

Der Blechzuschnitt B wird auf die Grundplatte G unterhalb des Dornes 8 gelegt. Dabei ist die Position des Blechzuschnitts B so ausgerichtet, dass seine eine Längskante unmittelbar am Eintritt des Spaltes 15 angeordnet ist, während seine andere Längskante im Halteschlitz 16b des Haltebalkens 16 liegt (Fig. 1).

Nicht dargestellte Seitenführungen an den Werkzeugteilen 2,3 und an der Grundplatte G verhindern ein Abdriften des Blechzuschnitts B während des nun einsetzenden Einrollvorganges. Dabei werden das erste Werkzeugteil 2 und der Dorn 8 gleichsinnig in Richtung der Mittelachse M der Vorrichtung 1 geschoben, so dass die dem Werkzeugteil 2 zugeordnete Hälfte des Blechzuschnitts B selbsttätig in den Spalt 15 einfädelt und zur einen Hälfte des vorzuformenden Schlitzprofils Sr gebogen wird. Dieser Vorgang läuft so lange, bis die Längskanten dieser Hälfte auf den Anschlag 17 stoßen, der das Einschubende für das Einschieben der betreffenden Hälfte des Blechzuschnitts B markiert. Während dieses Einrollvorgangs wird die andere Längskante des Blechzuschnitts B in dem Haltebalken 16 gehalten, der dabei das Gegenlager für die mit dem Einschieben des Blechzuschnitts B in den Spalt 15 einhergehenden Kräfte bildet (Fig. 2).

Sobald das erste Einschubende erreicht ist, wird der Prozessschritt gestoppt und das Werkzeugteil 2 mit dem Dorn 8 so weit in die entgegen gesetzte Richtung bewegt, bis der Blechzuschnitt B vollständig aus dem Halteschlitz 16b des Haltebalkens 16 gezogen ist. Anschließend wird der Haltebalken 16 in seine Ruheposition abgesenkt (Fig. 3).

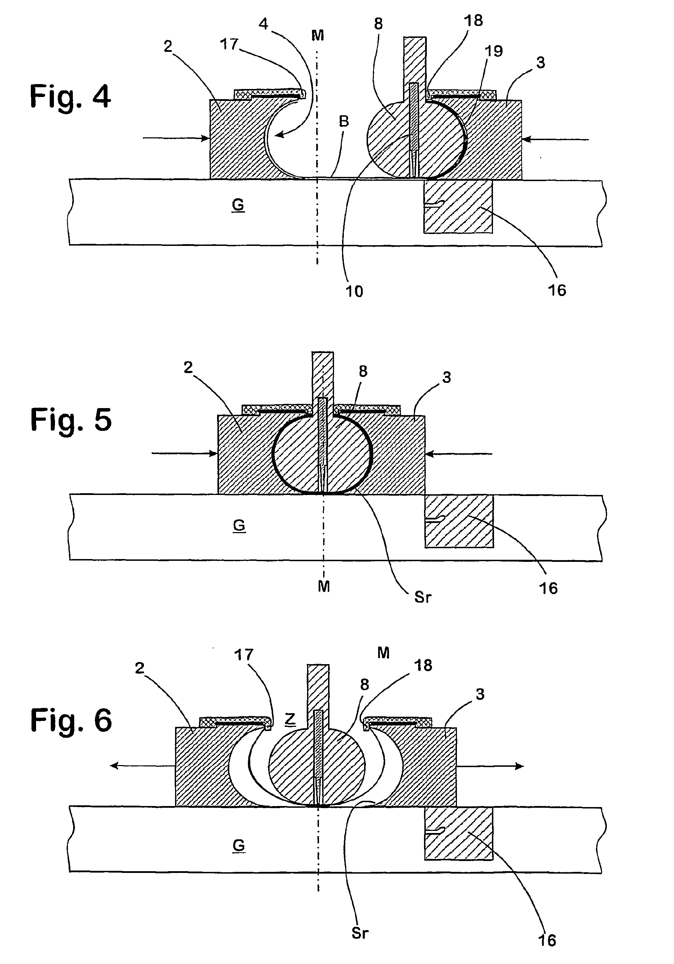

Nach Absenken des Haltebalkens 16 fährt der Dorn 8 zum zweiten Werkzeugteil 3 und wird so ausgerichtet, dass zwischen seinem dem Werkzeugteil 3 zugeordneten Umfangsabschnitt und der Ausnehmung 5 des Werkzeugteils 3 ein Spalt 19 gebildet ist, dessen Dicke wiederum um ein geringes Übermaß größer ist als die Dicke des Blechzuschnitts B (Fig. 4).

Anschließend wird das Werkzeugteil 3 mit dem Dorn 8 in Richtung der Mittelachse M bewegt. Die dem Werkzeugteil 3 zugeordnete Längskante des Blechzuschnitts B fädelt dabei in den Spalt 19 ein, so dass bei weiter fortgesetzter Bewegung des Werkzeugteils 3 und des Dorns 8 die zweite Hälfte des Blechzuschnitts B im Spalt 19 zur zweiten Hälfte des vorzuformenden Schlitzprofils Sr gebogen wird, bis das durch den Anschlag 18 definierte Einschubende an der oberen Längskante der Ausnehmung 7 erreicht ist. In dieser Stellung ist die Längsachse des Dorns 8 koaxial zur Mittelachse M der Vorrichtung 1 ausgerichtet. Nun erfolgt ein Vorkalibrierschritt, bei dem beide Werkzeugteile 2,3 noch einmal um einen geringen Betrag gegen die Mittelachse M zusammengefahren werden. Dabei kalibriert sich das Schlitzprofil Sr einschließlich einer Abrundung seiner seinen Schlitz Z begrenzenden Kantenbereiche (Fig. 5).

Im nächsten Schritt fahren die Werkzeugteile 2,3 wieder auseinander. Dabei werden die in den Ausnehmungen 4,5 der Werkzeugteile 2,3 jeweils sitzenden Hälften des Schlitzprofils Sr so weit auseinander gezogen, dass die Weite des Schlitzes größer ist als die Breite des Dorns 8 (Fig. 6).

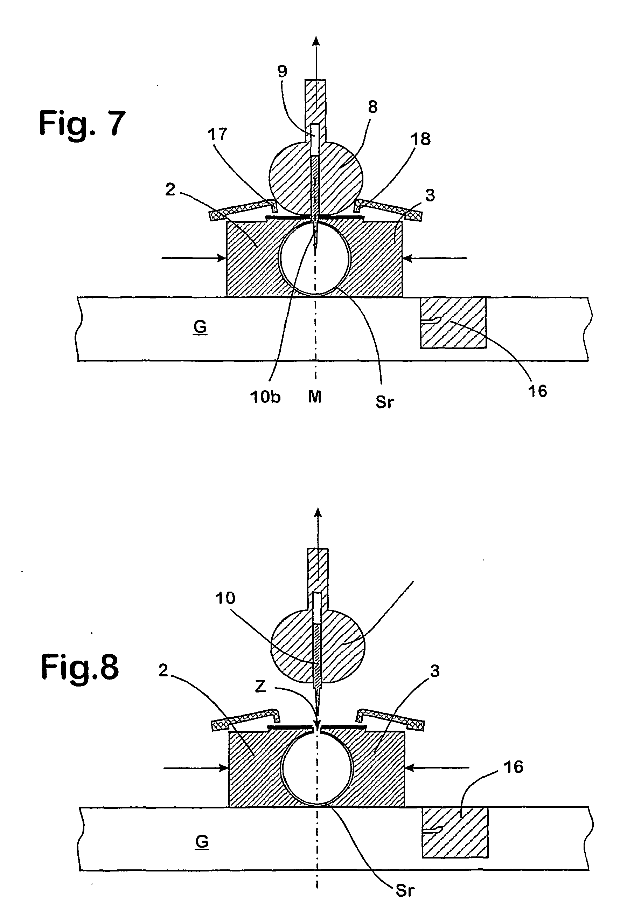

Nun kann der Dorn 8 in vertikaler Richtung und bei Bedarf auch in horizontaler Richtung aus dem Schlitzprofil 8 bewegt werden, bis er eine erste Stellung außerhalb des Schlitzprofils Sr erreicht hat. Dabei fährt selbsttätig der Anschlag 10 aus der Ausnehmung 9 des Dorns 8 heraus. Die erste Stellung des Dorns 8 ist dabei so ausgerichtet, dass in dieser Position der erste Absatz 10b des Anschlags 10 im Bereich des Spalts Z des Schlitzprofils Sr angeordnet ist. Die das Einschubende jeweils definierenden Anschläge 17,18 auf den Werkzeugteilen 2,3 werden gleichzeitig in ihre Ruhestellung bewegt, in der sie sich außerhalb des Bereiches des Schlitzes Z und entfernt von diesem auf dem jeweiligen Werkzeugteil 2,3 befinden. Danach fahren beide Werkzeugteile 2,3 wieder aufeinander zu und drücken die den Schlitz Z begrenzenden Längskanten gegen den Absatz 10b des Anschlags 10. Mit dem weiteren geringen Zusammenfahren erfolgt dann das endgültige Kalibrieren des Schlitzprofils Sr, bei dem unter hoher Krafteinwirkung ein definiertes Stauchen und Formkalibrieren stattfindet (Fig. 7).

Nach diesem Kalibrieren wird der Dorn 8 solange vertikal angehoben, bis der Anschlag 10 vollständig aus dem Schlitz Z des Schlitzprofils Sr gezogen ist. Daraufhin oder in zeitlicher Überlagerung werden die Werkzeugteile 2,3 zusammengefahren, bis die Längskanten des Schlitzes Z einander berühren und einen I-Stoß bilden. Anschließend wird der Dorn 8 horizontal in eine Ruhestellung bewegt (Fig. 8).

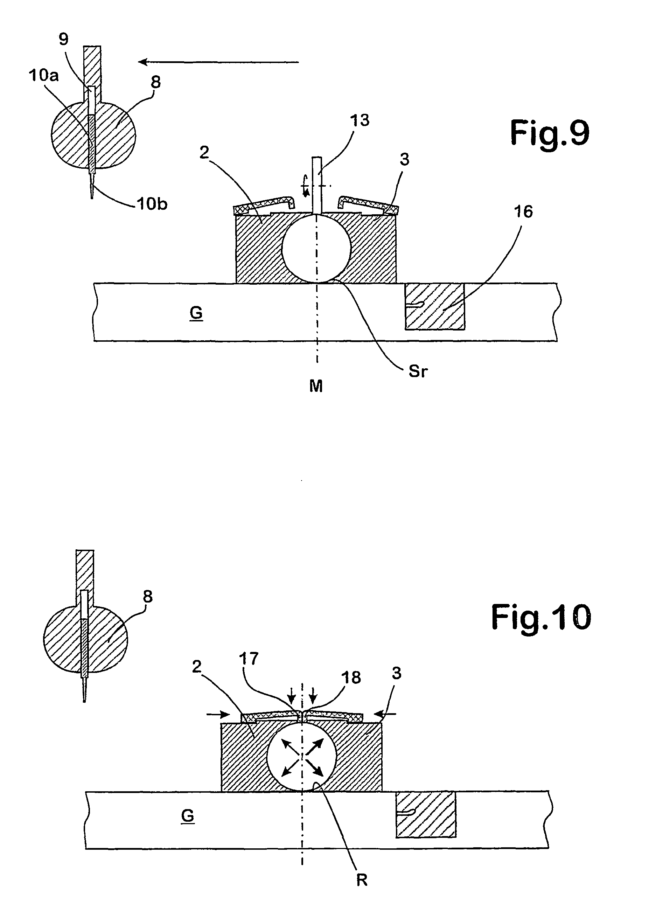

Im Bereich dieses I-Stoßes werden dann die Längskanten mittels der Laserschweißeinrichtung 11 miteinander verschweißt, so dass ein längsnahtverschweißtes rohrförmiges Hohlprofil R erhalten wird (Fig. 9).

Um die Form dieses rohrförmigen Hohlprofils R weiter zu verändern, wird nun noch ein Innenhochdruckumformen durchgeführt. Dazu werden die Enden des Hohlprofils R mit nicht dargestellten hydraulischen Dichtzylindern abgedichtet und das Hohlprofil R über diese Zylinder mit einer Wirkmedienflüssigkeit gefüllt, die mit einem für die Umformung ausreichenden Druck beaufschlagt ist. Während dieses Vorganges wird der Nahtbereich des Hohlprofils R durch geeignete, nicht dargestellte Gegenhalter, wie z.B. die Anschläge 17,18 gegen ungewolltes Aufwölben gesichert. Auch die Werkzeugteile 2,3 sind währenddessen in ihrer Position blockiert. Ist ein Nachschieben in Längsrichtung des Hohlprofils R erforderlich, kann dies über die Dichtzylinder erfolgen (Fig. 10).

Nach der Druckentlastung, dem Absaugen der Wirkmedienflüssigkeit und dem Auseinanderfahren der Werkzeugteile 2,3 in ihre Ausgangsstellung kann das fertige rohrförmige Hohlprofil R entnommen werden.

### BEZUGSZEICHEN

- 1: Vorrichtung zum Herstellen eines Hohlprofils R
- 2,3: Werkzeugteile
- 4,5: Ausnehmungen
- 6,7: Innenflächen der Ausnehmungen 4,5
- 8: Dorn
- 9: Ausnehmung
- 10: Anschlag
- 10a: oberer Abschnitt des Anschlags 10
- 10b: Absatz des Anschlags 10
- 11: Laserschweißeinrichtung
- 12: Träger
- 13: Nachformrolle
- 14: Gleitschuhe, Rolle
- 15: Spalt
- 15a: Ausnehmung
- 16: Haltebalken
- 16a: obere Seite des Haltebalkens 16
- 16b: Halteschlitz des Haltebalkens 16
- 17,18: Anschläge
- 19: Spalt

- B: Blechzuschnitt
- F: Schweißrichtung
- G: Grundplatte
- M: Mittelachse der Vorrichtung 1
- R: Hohlprofil
- Sr: Schlitzprofil
- Z: Schlitz des Schlitzprofils Sr

## Patentansprüche

1. Verfahren zum Herstellen eines längsnahtgeschweißten Hohlprofils (R) aus einem definierte Längskanten aufweisenden Blechzuschnitt (B),
- bei dem der Blechzuschnitt (B) zwischen zwei in einer Ausgangsstellung, in der sie auseinander gefahren sind, befindliche Werkzeugteile (2,3) gelegt wird, die jeweils eine Ausnehmung (4,5) aufweisen, die die Außenform mindestens eines Abschnitts des herzustellenden Hohlprofils (R) bestimmt,
- bei dem anschließend ein Dorn (8), dessen Außenform die Innenform des herzustellenden Hohlprofils (R) bestimmt, so in der Ausnehmung (4) des einen Werkzeugteils (2) ausgerichtet wird, dass zwischen seiner Umfangsfläche und der Innenfläche der Ausnehmung (4) ein Spalt (15) gebildet ist, dessen Dicke mit einem geringen Übermaß der Dicke des zu verformenden Blechzuschnitts (B) entspricht,
- bei dem der Blechzuschnitt (B) im Bereich seiner vom Dorn (8) abgewandten Hälfte gehalten wird,
- bei dem das dem Dorn (8) zugeordnete Werkzeugteil (2) mit dem Dorn (8) unter Aufrechterhaltung des Spaltes (15) in Richtung der vom Dorn (8) abgewandten Längskante des Blechzuschnitts (B) so verschoben wird, dass der Blechzuschnitt (B) mit seiner dem Dorn (8) zugeordneten Längskante in den Spalt (15) einläuft, bis sie ein Einschubende erreicht hat,
- bei dem der Dorn (8) in der Ausnehmung (5) des anderen Werkzeugteils (3) derart ausgerichtet wird, dass zwischen der Außenfläche des Dorns (8) und der Innenfläche dieser Ausnehmung (5) ein Spalt (19) ausgebildet ist, dessen Dicke mit einem geringen Übermaß der Dicke des zu verformenden Blechzuschnitts (B) entspricht,
- bei dem das nun dem Dorn (8) zugeordnete Werkzeugteil (3) mit dem Dorn (8) unter Aufrechterhaltung des Spaltes (19) in Richtung der vom Dorn (8) abgewandten Längskante des Blechzuschnitts (B) so verschoben wird, dass der Blechzuschnitt (B) mit seiner dem Dorn (8) zugeordneten Längskante in den Spalt (19) einläuft, bis sie ein Einschubende erreicht hat und aus dem Blechzuschnitt (B) ein den Dorn (8) an seinen Umfangsflächen umgebendes Schlitzprofil (Sr) gebildet ist,
- bei dem der Dorn (8) aus dem Innenraum des Schlitzprofils (Sr) bewegt wird,
- bei dem die den Schlitz (Z) begrenzenden Längskanten des Blechzuschnitts (B) miteinander verschweißt werden, wobei das Schlitzprofil (Sr) von den Werkzeugteilen (2,3) gehalten wird, und
- bei dem die Werkzeugteile (2,3) in ihre Ausgangsstellung gefahren werden, um das fertig verschweißte Hohlprofil (R) aus den Werkzeugteilen (2,3) zu entnehmen.

2. Verfahren nach Anspruch 1, **dadurch gekennzeichnet, dass** die Werkzeugteile (2,3), um das Herausbewegen des Dorns (8) aus dem Schlitzprofil (R) zu ermöglichen, unter Mitnahme der in ihren Ausnehmungen (4,5) jeweils liegenden Abschnitten des Blechzuschnitts (B) so weit aufgefahren werden, dass der Dorn (8) durch die zwischen den Längskanten des Schlitzprofils (Sr) dann erweiterte Öffnung (Z) bewegt werden kann.

3. Verfahren nach einem der voranstehenden Ansprüche, **dadurch gekennzeichnet, dass** die Werkzeugteile (2,3), nachdem der Dorn (8) aus dem Schlitzprofil (Sr) heraus bewegt ist, solange gegen einander geschoben werden, bis der Schlitz (Z) des Schlitzprofils (Sr) geschlossen ist oder eine minimale Weite besitzt.

4. Verfahren nach Anspruch 3, **dadurch gekennzeichnet, dass** die Sollweite des Schlitzes (Z) durch einen in den Schlitz (Z) gehaltenen Anschlag (10) vorgegeben wird.

5. Verfahren nach Anspruch 4, **dadurch gekennzeichnet, dass** der Anschlag (10) von dem Dorn (8) getragen ist.

6. Verfahren nach Anspruch 5, **dadurch gekennzeichnet, dass** der Anschlag (10) schwertartig ausgebildet ist und sich über die Länge des Schlitzes (Z) des Schlitzprofils (Sr) erstreckt.

7. Verfahren nach einem der Ansprüche 3 bis 6, **dadurch gekennzeichnet, dass** das Zusammenfahren der Werkzeugteile (2,3) zum Einstellen der Sollweite mindestens in zwei Stufen erfolgt.

8. Verfahren nach Anspruch 7 und einem der Ansprüche 5 oder 6, **dadurch gekennzeichnet, dass** der Anschlag (10) mindestens einen Absatz aufweist.

9. Verfahren nach einem der voranstehenden Ansprüche, **dadurch gekennzeichnet, dass** das Hohlprofil (R) nach dem Schweißen bei nach wie vor zusammengefahrenen Werkzeugteilen (2,3) innenhochdruckverformt wird.

10. Verfahren nach einem der voranstehenden Ansprüche, **dadurch gekennzeichnet, dass** der Dorn (8) derart auf den Blechzuschnitt (B) abgesenkt wird, dass er eine den Blechzuschnitt (B) auf einem Untergrund (G) fest haltende Druckkraft ausübt.

11. Vorrichtung zur Herstellung eines längsnahtgeschweißten Hohlprofils (R) aus einem definierte Längskanten aufweisenden Blechzuschnitt (B), mit mindestens zwei aus einer Ausgangsstellung, in der sie auseinander gefahren sind, in eine Formstellung gegeneinander zustellbaren Werkzeugteilen (2,3), die jeweils eine Ausnehmung (4,5) aufweisen, die die Außenform mindestens eines Abschnitts des herzustellenden Hohlprofils (R) bestimmt, und mit einer Schweißeinrichtung (11) zum Verschweißen der Längskanten des Blechzuschnitts (B) nach seiner Verformung zu einem Schlitzprofil (Sr),
**gekennzeichnet, durch**
- einen Dorn (8), der von einer Stelleinrichtung getragen ist, die dazu geeignet ist, ihn aus einer ersten Stellung, in der er in der Ausnehmung des einen Werkzeugteils (2,3) unter Ausbildung eines Spaltes (15) zwischen der Innenfläche (6) der Ausnehmung (4) dieses Werkzeugteils (2) und der Umfangsfläche des Dorns (8) positioniert ist, in eine zweite Stellung zu bewegen, in der er in der Ausnehmung (5) des zweiten Werkzeugteils (3) unter Ausbildung eines Spaltes (19) zwischen der Innenfläche (7) der Ausnehmung (5) dieses Werkzeugteils (3) und der Umfangsfläche des Dorns (8) positioniert ist, und
- eine Halteeinrichtung (17,18) zum Halten des Blechzuschnitts (B) im Bereich einer seiner Längskanten.

12. Vorrichtung nach Anspruch 11, **dadurch gekennzeichnet, dass** der Dorn (8) einen Anschlag (10) trägt, der die Sollweite des Schlitzes (Z) des zwischen den Werkzeugteilen (Z) jeweils zu bildenden Schlitzprofils (Sr) bestimmt.

13. Vorrichtung nach einem der Ansprüche 11 oder 12, **dadurch gekennzeichnet, dass** jedes Werkzeugteil (2,3) im Bereich der einen Längskante seiner Ausnehmung (4,5) einen Anschlag (17,18) aufweist, der das Einschubende für einen in die Ausnehmung eingeschobenen Abschnitt eines Blechzuschnitts bildet.

14. Vorrichtung nach Anspruch 13, **dadurch gekennzeichnet, dass** der Anschlag (17,18) aus einer Arbeitsstellung, in der er an der Längskante der Ausnehmung (4,5) positioniert ist, in eine Ruhestellung überführbar ist.

15. Vorrichtung nach einem der Ansprüche 11 bis 14, **dadurch gekennzeichnet, dass** die Stelleinrichtung dazu geeignet ist, den Dorn (8) auf den Blechzuschnitt (B) abzusenken, um eine Haltekraft auszuüben.

16. Vorrichtung nach einem der Ansprüche 11 bis 15, **dadurch gekennzeichnet, dass** sie eine Einrichtung zum Innenhochdruckumformen des zwischen den Werkzeugteilen (2,3) eingespannten Hohlprofils (R) umfasst.

17. Vorrichtung nach einem der Ansprüche 11 bis 16, **dadurch gekennzeichnet, dass** sie eine Einrichtung zum Prägen des zwischen den Werkzeugteilen (2,3) eingespannten Hohlprofils (R) umfasst.

## Claims

1. Method for the production of a longitudinal seam welded hollow profile (R) from a sheet-metal blank (B) with defined longitudinal edges
- wherein the sheet-metal blank (B) is placed between two tool parts (2, 3) lying in a starting position in which they are apart, each provided with a recess (4, 5) determining the external shape of at least one section of the hollow profile (R) that is to be produced,
- wherein a mandrel (8), whose external shape defines the internal shape of the hollow profile (R) that is to be produced, is then positioned relative to the recess (4) of one tool part (2) such that a gap (15) is formed between its peripheral surface and the inside surface of the recess (4), the thickness thereof being slightly greater than the thickness of the sheet-metal blank (B) that is to be shaped,
- wherein the sheet-metal blank (B) is held in the area of the half that is distant from the mandrel (8),
- wherein the tool part (2) adjacent to the mandrel (8) is moved together with the mandrel (8), with the gap (15) intact, in the direction of the longitudinal edge of the sheet-metal blank (B) that is distant from the mandrel (8) such that the sheet-metal blank (B) runs into the gap (15) along its longitudinal edge that is adjacent to the mandrel (8) until it reaches an insertion limit,
- wherein the mandrel (8) is positioned relative to the recess (5) of the second tool part (3) such that a gap (19) is formed between the external surface of the mandrel (8) and the inside surface of the said recess (5), the thickness thereof being slightly greater than the thickness of the sheet-metal blank (B) that is to be shaped,
- wherein the tool part (3) now adjacent to the mandrel (8) is moved together with the mandrel (8), with the gap (19) intact, in the direction of the longitudinal edge of the sheet-metal blank (B) that is distant from the mandrel (8) such that the sheet-metal blank (B) runs into the gap (19) along its longitudinal edge that is adjacent to the mandrel (8) until it reaches an insertion limit and a slit profile (Sr) that surrounds the mandrel (8) about its peripheral surfaces is formed from the sheet-metal blank (B),
- wherein the mandrel (8) is moved out from the interior of the slit profile (Sr),
- wherein the longitudinal edges of the sheet-metal blank (B) that define the slit (Z) are welded together, the slit profile (Sr) being supported by the tool parts (2, 3), and
- wherein the tool parts (2, 3) are moved to their starting position in order for the finished welded hollow profile (R) to be removed from the tool parts (2, 3).

2. Method according to Claim 1, **characterised in that** in order to allow the mandrel (8) to be moved out from the slit profile (R), the tool parts (2, 3) together with the sections of the sheet-metal blank (B) that lie in their respective recesses (4, 5) are moved sufficiently far apart for the mandrel (8) to be moved through the enlarged opening (Z) between the two longitudinal edges of the slit profile (Sr).

3. Method according to any one of the preceding claims **characterised in that** the tool parts (2, 3) are pushed together after the mandrel (8) has been moved out of the slit profile (Sr) until the slit (Z) of the slit profile (Sr) is closed or its width has reached a minimum.

4. Method according to Claim 3, **characterised in that** the desired width of the slit (Z) is determined by a tongue (10) held in the slit (Z).

5. Method according to Claim 4, **characterised in that** the tongue (10) is carried by the mandrel (8).

6. Method according to Claim 5, **characterised in that** the tongue (10) is sword-shaped and extends along the length of the slit (Z) of the slit profile (Sr).

7. Method according to any one of Claims 3 to 6, **characterised in that** at least two steps are used to move the tool parts (2,3) together in order to define the desired width.

8. Method according to Claim 7 and one of Claims 5 and 6, **characterised in that** the tongue (10) has at least one shoulder.

9. Method according to any one of the preceding claims **characterised in that** the hollow profile (R) is subjected to internal high-pressure shaping after welding with the tool parts (2, 3) still closed.

10. Method according to any one of the preceding claims, **characterised in that** the mandrel (8) is lowered onto the sheet-metal blank (B) such that it exerts a pressure that securely holds the sheet-metal blank (B) on an underlying surface (G).

11. Apparatus for producing a longitudinal seam welded hollow profile (R) from a sheet-metal blank (B) with defined longitudinal edges, provided with at least two tool parts (2, 3) that can be moved together into a forming position from a starting position in which they are apart, and that each have a recess (4, 5) determining the external shape of at least one section of the hollow profile (R) that is to be produced, and with a welding device (11) for welding together the longitudinal edges of the sheet-metal blank (B) after it has been formed into a slit profile (Sr), **characterised by**
- a mandrel (8) carried by a control device which is capable to move it from a first position in which it is positioned in the recess of one tool part (2,3) with a gap (15) between the inside surface (6) of the recess (4) of the said tool part (2) and the peripheral surface of the mandrel (8), into a second position in which it is positioned in the recess (5) of the second tool part (3) with a gap (19) between the inside surface (7) of the recess (5) of said tool part (3) and the peripheral surface of the mandrel (8), and
- a holding device (17, 18) for holding the sheet-metal blank (B) in the region of one of its longitudinal edges.

12. Apparatus according to Claim 11, **characterised in that** the mandrel (8) carries a tongue (10) that defines the desired width of the slit (Z) of the slit profile (Sr) that is to be formed between the tool parts (2,3) [*sic*].

13. Apparatus according to any one of Claims 11 and 12, **characterised in that** each tool part (2, 3) is provided in the region of one longitudinal edge of its recess (4, 5) with a stop (17, 18) forming the insertion limit for a portion of a sheet-metal blank inserted into the recess.

14. Apparatus according to Claim 13, **characterised in that** the stop (17, 18) can be moved from an operating position in which it is located on the longitudinal edge of the recess (4, 5) into a resting position.

15. Apparatus according to any one of Claims 11 to 14, **characterised in that** the control device is capable to lower the mandrel (8) onto the sheet-metal blank (B) in order to exert a holding force on it.

16. Apparatus according to any one of Claims 11 to 15, **characterised in that** it comprises a means for the internal high-pressure shaping of the hollow profile (R) held between the tool parts (2, 3).

17. Apparatus according to any one of Claims 11 to 16, **characterised in that** it comprises a means for embossing the hollow profile (R) held between the tool parts (2, 3).

## Revendications

1. Procédé de fabrication d'un profilé creux (R) soudé par cordon longitudinal à partir d'un flan de tôle (B) qui présente des bords longitudinaux définis,
- dans lequel le flan de tôle (B) est placé entre deux parties (2, 3) d'outil situées en position initiale dans laquelle elles sont écartées l'une de l'autre et qui présentent chacune une découpe (4, 5) qui définit la forme extérieure d'au moins une partie du profilé creux (R) à fabriquer,
- dans lequel un mandrin (8) dont la forme extérieure définit la forme intérieure du profilé creux (R) à fabriquer est ensuite aligné dans la découpe (4) d'une des parties (2) de l'outil de manière à former entre sa surface périphérique et la surface intérieure de la découpe (4) un interstice (15) dont l'épaisseur correspond avec une légère sur-dimension à l'épaisseur du flan de tôle (B) à façonner,
- dans lequel le flan de tôle (B) est maintenu dans la partie de sa moitié non tournée vers le mandrin (8),
- dans lequel la partie (2) de l'outil associée au mandrin (8) est déplacée avec le mandrin (8) en direction du bord longitudinal du flan de tôle (B) non tourné vers le mandrin (8) tout en maintenant l'interstice (15) de telle sorte que le flan de tôle (B) pénètre dans l'interstice (15) par son bord longitudinal associé au mandrin (8) jusqu'à avoir atteint une extrémité d'insertion,
- dans lequel le mandrin (8) est aligné dans la découpe (5) de l'autre partie (3) de l'outil de manière à former entre la surface extérieure du mandrin (8) et la surface intérieure de cette découpe (5) un interstice (19) dont l'épaisseur correspond avec une légère sur-dimension à l'épaisseur du flan de tôle (B) à façonner,
- dans lequel la partie (3) de l'outil maintenant associée au mandrin (8) est déplacée avec le mandrin (8) en direction du bord longitudinal du flan de tôle (B) non tourné vers le mandrin (8) en maintenant l'interstice (19) de telle sorte que le flan de tôle (B) pénètre dans l'interstice (19) par son côté longitudinal associé au mandrin (8) jusqu'à atteindre une extrémité d'insertion et qu'un profilé fendu (Sr) qui entoure le mandrin (8) par sa surface périphérique soit formé à partir du flan de tôle (B),
- dans lequel le mandrin (8) est déplacé hors de l'espace intérieur du profilé fendu (Sr),
- dans lequel les bords longitudinaux du flan de tôle (B) qui délimitent la fente (Z) sont soudés l'un à l'autre, le profilé fendu (Sr) étant maintenu par les parties (2, 3) de l'outil et
- dans lequel les parties (2, 3) de l'outil sont ramenées dans leur position initiale pour enlever le profilé creux (R) soudé et terminé des parties (2, 3) de l'outil.

2. Procédé selon la revendication 1, **caractérisé en ce que** pour permettre l'extraction du mandrin (8) hors du profilé fendu (R), les parties (2, 3) de l'outil sont déployées en entraînant les parties du flan de tôle (B) situées dans leur découpe (4, 5) respective suffisamment pour que le mandrin (8) puisse être déplacé par l'ouverture (Z) alors agrandie entre les bords longitudinaux du profilé fendu (Sr).

3. Procédé selon l'une des revendications précédentes, **caractérisé en ce qu'**après que le mandrin (8) a été extrait du profilé fendu (Sr), les parties (2, 3) de l'outil sont rapprochées l'une de l'autre jusqu'à ce que la fente (Z) du profilé fendu (Sr) soit fermée ou possède une largeur minimale.

4. Procédé selon la revendication 3, **caractérisé en ce que** la largeur de consigne de la fente (Z) est prédéterminée par une butée (10) maintenue dans la fente (Z).

5. Procédé selon la revendication 4, **caractérisé en ce que** la butée (10) est portée par le mandrin (8).

6. Procédé selon la revendication 5, **caractérisé en ce que** la butée (10) est configurée en semelle et s'étend sur la longueur de la fente (Z) du profilé fendu (Sr).

7. Procédé selon l'une des revendications 3 à 6, **caractérisé en ce que** le rapprochement des parties (2, 3) de l'outil en vue d'établir la largeur de consigne s'effectue en au moins deux étapes.

8. Procédé selon la revendication 7 et l'une des revendications 5 ou 6, **caractérisé en ce que** la butée (10) présente au moins un appendice.

9. Procédé selon l'une des revendications précédentes, **caractérisé en ce qu'**après le soudage, le profilé creux (R) est façonné sous une haute pression intérieure pendant que les parties (2, 3) de l'outil sont rapprochées comme indiqué plus haut.

10. Procédé selon l'une des revendications précédentes, **caractérisé en ce que** le mandrin (8) est abaissé sur le flan de tôle (B) de telle sorte qu'il exerce une force de poussée qui maintient le flan de tôle (B) sur un soubassement (G).

11. Dispositif de fabrication d'un profilé creux (R) soudé par cordon longitudinal à partir d'un flan de tôle (B) qui présente des bords longitudinaux définis, avec au moins deux parties (2, 3) d'outil qui peuvent être rapprochées l'une de l'autre en une position de façonnage depuis une position initiale dans laquelle elles sont écartées l'une de l'autre, et qui présentent chacune une découpe (4, 5) qui définit la forme extérieure d'au moins une partie du profilé creux (R) à fabriquer, et un dispositif de soudage (11) qui soude les bords longitudinaux du flan de tôle (B) après son façonnage en un profilé fondu (Sr),
**caractérisé par** :
- un mandrin (8) qui est porté par un dispositif de réglage qui convient pour le déplacer depuis une première position dans laquelle il est positionné dans la découpe d'une des pièces (2, 3) de l'outil en formant un interstice (15) entre la surface intérieure (6) de la découpe (4) de cette partie (2) de l'outil et la surface périphérique du mandrin (8), jusque dans une deuxième position dans laquelle il est positionné dans la découpe (5) de la deuxième partie (3) de l'outil en formant un interstice (19) entre la surface intérieure (7) de la découpe (5) de cette partie (3) de l'outil et la surface périphérique du mandrin (8) et
- un dispositif de maintien (17, 18) qui maintient le flan de tôle (B) dans la zone d'un de ses bords longitudinaux.

12. Dispositif selon la revendication 11, **caractérisé en ce que** le mandrin (8) porte une butée (10) qui définit la largeur de consigne de la fente (Z) du profilé fendu (Sr) qui doit être formé entre les parties (Z) de l'outil.

13. Dispositif selon l'une des revendications 11 ou 12, **caractérisé en ce que** chaque partie (2, 3) de l'outil présente dans la zone d'un des bords longitudinaux de sa découpe (4, 5) une butée (17, 18) qui forme l'extrémité d'insertion pour une partie d'un flan de tôle insérée dans la découpe.

14. Dispositif selon la revendication 13, **caractérisé en ce que** la butée (17, 18) peut être transférée d'une position de travail dans laquelle elle est placée sur le bord longitudinal de la découpe (4, 5) jusque dans une position de repos.

15. Dispositif selon l'une des revendications 11 à 14, **caractérisé en ce que** le dispositif de réglage convient pour abaisser le mandrin (8) sur le flan de tôle (B) en vue d'exercer une force de maintien.

16. Dispositif selon l'une des revendications 11 à 15, **caractérisé en ce qu'**il comprend un système de façonnage sous haute pression interne du profilé creux (R) serré entre les parties (2, 3) de l'outil.

17. Dispositif selon l'une des revendications 11 à 16, **caractérisé en ce qu'**il comprend un système qui exerce une poussée sur le profilé creux (R) serré entre les parties (2, 3) de l'outil.
